(19) Europäisches Patentamt
European Patent Office
Office européen des brevets

(11) EP 2 405 356 A2

(12) **EUROPÄISCHE PATENTANMELDUNG**

(43) Veröffentlichungstag:
**11.01.2012 Patentblatt 2012/02**

(51) Int Cl.:
***G06F 11/26*** *(2006.01)* ***B25J 9/16*** *(2006.01)*
***H04M 1/24*** *(2006.01)*

(21) Anmeldenummer: **11159621.9**

(22) Anmeldetag: **24.03.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **08.04.2010 DE 102010003719**

(71) Anmelder: **Vodafone Holding GmbH**
**40213 Düsseldorf (DE)**

(72) Erfinder:
• **Lien, Tam**
**40599, Düsseldorf (DE)**
• **Petlic, Christoph**
**41539, Dormagen (DE)**

(74) Vertreter: **Jostarndt, Hans-Dieter**
**Jostarndt Patentanwalts-AG**
**Brüsseler Ring 51**
**52074 Aachen (DE)**

(54) **Verfahren und Vorrichtung zum Betätigen einer Taste einer Tastatur mit einem Roboter-Tastfinger**

(57) Die Erfindung betrifft ein Verfahren, das es einer automatisierten Testeinrichtung ermöglicht, verschiedene Tastaturen von Endgeräten zu erkennen und zu bedienen. Anhand weniger erfasster Parameter lernt die Testeinrichtung die Position von Tasten anhand eines ausgewählten Modells aus einer Mehrzahl von verfügbaren Modellen zu erkennen. Dabei macht sich das Verfahren bestimmte geometrische Eigenschaften von Tastaturen zu Nutze. Die so ermittelten Tastenpositionen versetzen die automatisierte Testeinrichtung in die Lage, über eine Steuerung mit Hilfe eines Roboter-Tastfingers Tasten einer Tastatur fehlerfrei zu betätigen. Ein speziell dafür angepasstes Computerprogramm gewährleistet die automatische und fehlerfreie Durchführung des Verfahrens. Ferner schafft das Verfahren die Voraussetzung, dass sich das sich anschließende Testen verschiedenster Endgeräte-Typen mittels der roboterunterstützten, automatisierten Testeinrichtung schneller und mit erheblich reduzierter Fehlerquote durchführen lässt.

Fig. 1

EP 2 405 356 A2

**Beschreibung**

Die Erfindung betrifft ein Verfahren zum Betätigen einer Taste einer Tastatur mittels eines Roboter-Tastfinger. Des Weiteren betrifft die Erfindung eine Vorrichtung zum Betätigen einer Taste einer Tastatur eines Endgeräts mittels eines Roboter-Tastfingers. Ferner bezieht sich die Erfindung auf ein Computerprogramm, das so angepasst ist, dass es das erfindungsgemäße Verfahren ausführen kann.

Endgeräte, wie beispielsweise Mobiltelefone, werden umfangreichen Tests unterzogen, um ihre einwandfreie Funktion zu überprüfen. Um eine realistische Simulation des Normalbetriebs zu gewährleisten, erfolgt die Bedienung der Endgeräte hierbei mittels der Schnittstellen, die auch von den Nutzern zur Bedienung der Endgeräte verwendet werden. Dies bedeutet insbesondere, dass Eingaben über die Tastaturen der Endgeräte vorgenommen werden.

In der Vergangenheit wurden solche Tests weitgehend manuell ausgeführt, indem ein Endgeräte-Tester das zu testende Endgerät entsprechend der vorgegebenen Testschritte bediente. Mit zunehmender Vielfalt von zu testenden Endgeräten und der auf Ihnen ausgeführten Programmen gestalten sich solche manuellen Funktionstests jedoch personal- und zeitaufwendig. Daher wird nach Verbesserungsmöglichkeiten bei der Testdurchführung gesucht, um den Zeit-und Kostenaufwand zu reduzieren.

Aus der DE 10 2006 004 284 A1 geht ein Testverfahren für ein eine Benutzerschnittstelle aufweisendes technisches Gerät hervor. Insbesondere werden mittels des Verfahrens mobile Kommunikationsendgeräte, wie etwa Mobiltelefone, getestet. Zur Durchführung des Tests wird von einem Steuermodul eine roboterunterstützte Testeinrichtung gesteuert, die Ausgaben des Testgeräts mittels einer Kamera und eines Mikrofons erfasst. Die erfassten Ausgaben werden in der Steuereinheit ausgewertet, um Gerätefunktionen automatisiert zu erfassen. Zur Bedienung des Testgeräts weist die Testeinrichtung Roboter-Tastfinger zur Betätigung einer Tastatur des Testgeräts auf.

Aufgrund der Vielfalt der zu testenden Endgeräte besteht bei der automatisierten Testdurchführung ein Problem darin, das roboterunterstützte Testsystem auf die jeweilige Tastatur des Endgeräts einzustellen, so dass die Bedienung der Tastatur durch den Roboter-Tastfinger während der Testschritte fehlerlos erfolgt.

Es ist daher eine Aufgabe der Erfindung, die Durchführung von Endgerätetests möglichst effizient durchführen zu können. Insbesondere soll das fehlerfreie Betätigen einer Taste auf verschiedenen Tastaturen von Endgeräten bei der Durchführung von Tests auf effiziente Weise ermöglicht werden.

Diese Aufgabe wird erfindungsgemäß durch ein Verfahren zum Betätigen einer ersten Taste einer Tastatur mittels eines Roboter-Tastfingers gelöst, das folgende Verfahrensschritte aufweist: Erfassen von Parametern der Tastatur, Ermitteln einer Position der ersten Taste in Abhängigkeit von den erfassten Parametern unter Verwendung eines Modells der Tastatur, Steuern des Roboter-Tastfingers an die ermittelte Position der ersten Taste und Betätigen der ersten Taste mit dem Roboter-Tastfinger.

Bei einer Vorrichtung zum Betätigen einer ersten Taste einer Tastatur eines Endgeräts wird die Aufgabe dadurch gelöst, dass die Vorrichtung ein Steuermodul und ein Berechnungsmodul umfasst, wobei das Berechnungsmodul dazu ausgestaltet ist, eine Position der Taste in Abhängigkeit von den erfassten Parametern der Tastatur unter Verwendung eines Modells der Tastatur zu ermitteln, und wobei das Steuermodul dazu ausgestaltet ist, den Roboter-Tastfinger an die in dem Berechnungsmodul ermittelte Position der ersten Taste zu steuern.

Ferner wird die Aufgabe durch ein Computerprogramm gelöst, das so angepasst ist, dass es ein hierin beschriebenes Verfahren ausführen kann.

Die Tastatur auf der sich die erste Taste befindet, ist vorzugsweise Bestandteil eines Endgeräts, beispielsweise eines Kommunikationsendgeräts. Die Betätigung der ersten Taste an der berechneten Position mittels des Roboter-Tastfingers kann insbesondere während eines Tests des Endgeräts vorgenommen werden.

Weitere Ausgestaltungen und vorteilhafte Ausbildungen der Erfindung sind in den Unteransprüchen angegeben.

Die Erfindung löst das zuvor genannte Problem, indem Tastenpositionen in einfacher Weise berechnet werden können. Insbesondere ist nicht erforderlich, die Positionen der Tasten einzeln zu messen. Das ist darin begründet, dass mit diesem Verfahren aus der Erfassung von Parametern der Tastatur unter Zuhilfenahme eines ausgewählten Modells die Tastenpositionen berechnet werden und der Roboter-Tastfinger an die berechneten Positionen gesteuert werden kann. Hierdurch wird eine schnelle und fehlerfreie Testdurchführung gewährleistet.

In einer Ausgestaltung des Verfahrens und der Vorrichtung wird das Modell in Abhängigkeit von einem erfassten Typ der Tastatur aus einer Mehrzahl von Modellen ausgewählt.

Dies ermöglicht, je nach Ausgestaltung der Tastatur ein angepasstes Modell zu wählen, um die Ermittlung der Tastenpositionen korrekt durchzuführen und den Roboter-Tastfinger präzise an die ermittelte Position zu steuern. Damit wird weiter erreicht, dass sich die Fehlerquote beim Betätigen von Tasten durch die Testeinrichtung so reduziert, dass eine fehlerfreie und schnelle Testdurchführung gewährleistet ist.

Die Tastatur kann in verschiedenen Ausführungsformen und mit verschiedenen Tastaturbelegungen ausgestaltet sein. Die geometrischen und funktionalen Eigenschaften der Tastatur ermöglichen es, das entsprechende Modell aus einer Anzahl unterschiedlicher Modelle auszuwählen und anhand des Modells die Positionen der Tasten zu ermitteln.

Insbesondere können die Modelle für verschiedene Tastaturtypen unterschiedliche Anzahlen von Reihen und Spalten von Tasten umfassen.

In einer weiteren Ausgestaltung des Verfahrens und der Vorrichtung wird den Modellen jeweils eine Anordnung der Tasten in Reihen und Spalten mit gleichen Abständen zwischen den Tasten einer Reihe und den Tasten einer Spalte zugrunde gelegt.

In einer weiteren Ausgestaltung des Verfahrens und der Vorrichtung ist ein erster erfasster Parameter ein Abstand zwischen zwei vorgegebenen Tasten einer Reihe oder sind es Positionen von vorgegebenen weiteren Tasten einer Reihe. Die weiteren Tasten umfassen vorzugsweise nicht die erste Taste, deren Position ermittelt wird.

Gemäß einer weiteren Ausführungsform des Verfahrens und der Vorrichtung handelt es sich bei einem zweiten erfassten Parameter um einen Abstand zwischen zwei vorgegebenen Tasten einer Spalte oder um Positionen von vorgegebenen weiteren Tasten einer Spalte. Wiederum umfassen die weiteren Tasten vorzugsweise nicht die erste Taste, deren Position ermittelt wird.

Es hat sich gezeigt, dass zwischen benachbarten Tasten einer Spalte und/oder zwischen benachbarten Tasten einer Reihe in vielen Fällen im Wesentlichen gleiche Abstände vorliegen. Diese geometrische Eigenschaft der Tastatur wird bei den zuvor genannten Ausgestaltungen der Erfindung ausgenutzt. Dabei wird ermöglicht, dass das Berechnungsmodul in der Testeinrichtung in Abhängigkeit von einem Abstand der Tasten einer Spalte und/oder dem Abstand der Tasten einer Reihe die Positionen der weiteren Tasten errechnet. Hierdurch wird die Berechnung mit einer geringen Zahl von benötigten Parametern durchgeführt und dadurch vereinfacht.

Die eingesetzten Modelle können eine geradlinige Anordnung der Tasten einer Reihe oder Spalte vorsehen. Dabei können die Reihen und Spalten insbesondere im Wesentlichen rechtwinklig zueinander angeordnet sein. Durch derartige Modelle kann eine Vielzahl von Tastaturen beschrieben werden.

Bei einigen Endgeräten kann es jedoch vorkommen, dass Tastenreihen und/oder -spalten nicht geradlinig, sondern in einer Kurve bzw. einem Bogen angeordnet sind. Daher sieht eine Ausgestaltung der Erfindung vor, dass wenigstens ein Modell eine Anordnung der Tasten einer Reihe und/oder einer Spalte entlang mehrerer Geraden vorsieht, um den Verlauf der Reihe oder. Spalte nachzubilden bzw. zu approximieren.

Vorteilhaft kann der krummlinige Verlauf einer Tastenreihe oder -spalte in dieser Ausgestaltung anhand von mehreren Geraden approximiert werden. Dies erlaubt es, auf einfache Weise auch die Tastenpositionen von Tastaturen mit nicht geradlinigen Reihen und/oder Spalten zu bestimmen.

In einer weiteren Ausgestaltung des Verfahrens und der Vorrichtung sind die Geraden spiegelsymmetrisch bezüglich einer Mittelachse in einer Tastaturebene angeordnet.

In einem solchen Modell können insbesondere die Positionen von Tasten auf Tastaturen mit einem bogenförmigen Verlauf der Reihen und/oder Spalten auf einfache Weise ermittelt werden, wobei die Spiegelsymmetrie der Bögen ausgenutzt werden kann. Insbesondere ergibt sich dabei infolge der Ausrichtung einer Geraden die Ausrichtung der anderen, spiegelsymmetrischen Geraden, ohne dass diese gesondert ermittelt werden muss.

Bei einer Weiterbildung des Verfahrens und der Vorrichtung handelt es sich bei einem weiteren Parameter um wenigstens einen Steigungsparameter, der eine Ausrichtung wenigstens einer Geraden beschreibt.

Anhand der Ausrichtung der Geraden kann deren Lage ermittelt werden. Damit kann insbesondere ausgehend von einer bekannten Tastenpositionen einer Reihe oder Spalte unter zusätzlich Heranziehung des Abstands zwischen den Tasten der Reihe oder Spalte die Position einer weitere Taste derselben Reihe oder Spalte bestimmt werden, indem der Geraden über eine aus dem Abstand ermittelte Entfernung gefolgt wird.

In einer weiteren Ausgestaltung des Verfahrens und der Vorrichtung unterscheiden sich die Modelle in der Anzahl der Reihen von Tasten und/oder der Spalten von Tasten.

Die verschiedenen Endgerätehersteller stellen unterschiedlich ausgestaltete Tastenfelder her, bei denen die Anzahl der Tastenreihen und/oder -spalten variieren kann. Das kann durch die äußeren Abmessungen oder besondere funktionale Anordnungen von Tastatur und Endgerätedisplay begründet sein. Um den Entwicklungen Rechnung zu tragen, werden mehrere Modelle vorgesehen, die es ermöglichen, Positionen von Tasten auf Tastenfeldern für die verschiedenen Bauformen von Tastaturen zu ermitteln.

In einer weiteren vorteilhaften Ausgestaltung des Verfahrens und der Vorrichtung sieht ein erstes Modell eine Anordnung der Tasten in drei Spalten und vier Reihen vor.

Es hat sich gezeigt, dass anhand eines solchen Modells insbesondere Tastaturen von einer Vielzahl von Kommunikationsendgeräten nachgebildet werden können.

Dabei wird in einer Ausgestaltung des Verfahrens und der Vorrichtung das erste Modell zur Ermittlung der Position einer Taste eines reduzierten Tastenfeldes herangezogen, bei dem einer Taste mehrere Buchstaben zugeordnet sind.

Derartige Tastaturen benötigen aufgrund der Mehrfachbelegungen eine geringe Anzahl von Tasten und somit eine kleinere Fläche. Daher werden derartige Tastaturen häufig bei kompakten Kommunikationsendgeräten, wie beispielsweise Mobiltelefonen, eingesetzt. Die Festlegung eines ersten Modells für den Tastaturtyp eines reduzierten Tastenfeldes, das die Eigenschaften der Mehrfachbelegung von Tasten umfasst, ermöglicht es, dass unter Zugrundelegung des Modells die Tastenpositionen solcher Tastaturen ermittelt werden können, die in einer Vielzahl von Endgeräten eingesetzt werden.

In einer Ausgestaltung des Verfahrens und der Vorrichtung sieht ein zweites Modell eine Anordnung der Tasten in zehn Spalten und drei Reihen vor.

Dabei wird einer Ausgestaltung des Verfahrens und der Vorrichtung das zweite Modell zur Ermittlung der Position einer Taste eines vollständigen Tastaturfeld herangezogen. Eine solche zeichnet sich insbesondere dadurch aus, dass für jeden Buchstaben genau eine Taste vorgesehen ist.

Derartige Tastaturen werden häufig bei weniger kompakten Kommunikationsendgeräten eingesetzt, um eine bequeme Texteingabe zu ermöglich, oder in ihrer Größe derart verringert, dass sie auch bei kompakten Geräten eingesetzt werden können Die Festlegung eines zweiten Modells für diesen Tastaturtyp ermöglicht es, bei dieser Gruppe von Tastenfeldern unter Zugrundelegung der ermittelten Positionen die Tasten dieses Tastaturtyps betätigen zu können, die ebenfalls in einer Vielzahl von Endgeräten verwendet werden.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

Von den Figuren zeigt:

Fig. 1    eine schematische Darstellung einer Testeinrichtung zum Testen von Endgeräten,

Fig. 2    eine schematische Darstellung eines reduzierten Tastenfelds eines Endgeräts,

Fig. 3    eine schematische Darstellung einer vollständigen Tastatur eines Endgeräts und

Fig. 4    eine schematische Darstellung einer vollständigen Tastatur eines Endgeräts mit bogenförmig angeordneten Tastenreihen.

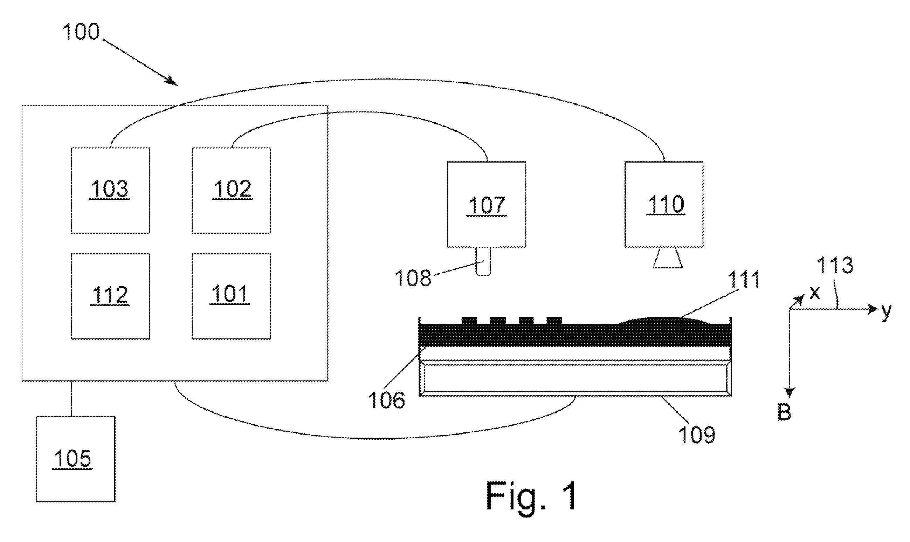

In der Figur 1 ist eine Testeinrichtung 100 gezeigt, die in der beispielhaft dargestellten Ausgestaltung ein Berechnungsmodul 101, ein Steuermodul 102 und ein Auswerte- und Protokolliermodul 103 sowie eine Benutzerschnittstelle 105 umfasst. Die Testeinrichtung 100 umfasst elektronische und mechanische Komponenten, wie beispielsweise eine Server- oder eine Computereinrichtung, um automatisierte Tests durchzuführen.

Zur Bedienung durch den Nutzer weisen die zu testenden Endgeräte 106 Ein-und Ausgabemittel auf, die eine Tastatur umfassen. Des Weiteren umfassen die Ein- und Ausgabemittel vorzugsweise ein Anzeigemodul 111, mit dem visuelle Ausgaben des Endgeräts 106 vorgenommen werden können und das als Display ausgestaltet sein kann. Darüber hinaus können akustische Ein- und Ausgabemittel, wie etwa ein Mikrofon und einen Lautsprecher, vorgesehen sein. Ein Beispiel für ein Endgerät 106, das mit der Testeinrichtung getestet werden kann, ist ein mobiles Kommunikationsendgerät, wie etwa ein Mobiltelefon, ein PDA (Personal Data Assistent), ein tragbarer Computer oder dergleichen. Weitere Beispiele sind digitale Kameras, Navigationsgeräte, Spielekonsolen und medizinische Geräte, soweit diese eine Tastatur aufweisen.

Mit dem Berechnungsmodul 101 werden anhand erfasster Parameter und eines Modells, das aus einer Mehrzahl von Modellen ausgewählt wird, Positionen von Tasten auf einer Tastatur eines zu testenden Endgeräts 106 ermittelt. Das Berechnungsmodul 101 ist beispielsweise als ein programmierbarer Mikroprozessor ausgestaltet, der dazu ausgelegt ist, Berechnungen durchzuführen, um die Positionen der Tasten der Tastatur des Endgeräts 106 zu bestimmen. Zweckmäßigerweise führt das Berechnungsmodul 101 anhand des ausgewählten Modells die Berechnungen während des Tests bzw. vor der eigentlichen Testdurchführung aus.

Das Steuermodul 102 ist signalmäßig mit dem Berechnungsmodul 101 verbunden und erhält die von dem Berechnungsmodul 101 anhand des ausgewählten Modells ermittelten Tastenpositionen. Das Steuermodul 102 übermittelt Steuerbefehle an eine Betätiger-Einheit 107, die einen mechanischen Roboter-Tastfinger 108 bewegt, um Tasten auf einem Endgerät 106 zu betätigen. Das Steuermodul 102 ist in der Lage, auf Basis der ermittelten Werte aus dem Berechnungsmodul 101 und entsprechender Steuerbefehle an die Betätiger-Einheit 107 den Roboter-Tastfinger 108 an eine ermittelte Position einer gewünschten Taste zu steuern und mittels der Betätiger-Einheit 107 die Taste auf der Tastatur eines Endgeräts 106 zu betätigen.

Die korrekte Ermittlung der Tastenpositionen ist Voraussetzung, um in einem folgenden Testlauf die gewünschte Taste einer Tastatur zu betätigen und damit eine fehlerfreie Testdurchführung zu garantieren.

Bei dem Steuermodul 102 handelt es sich beispielsweise um eine mikroprozessorgesteuerte Schaltung, die dazu ausgestaltet ist, Steuersignale zu erzeugen und zu übertragen, um beispielsweise Robotereinrichtungen wie etwa einen Testroboter oder einen Roboterarm oder einen Roboter-Tastfinger 108 zu kontrollieren beziehungsweise zu steuern.

Instruktionen zur Generierung von Steuersignalen und Steuerbefehlen zur Steuerung des Roboter-Tastfingers 108 erhält das Steuermodul 102 von einem Testprogrammmodul 112 gemäß einer vorgegebenen Testroutine. Dabei gibt das Testprogrammmodul 112 insbesondere vor, welches Taste bzw. Tastenfolge jeweils mittels des Roboter-Tastfingers 108 zu betätigen ist. Eine Testroutine umfasst eine Abfolge von Testschritten, die zu durchlaufen sind, um ein Endgerät auf Funktionsfähigkeit zu überprüfen. Diese Prüfschritte umfassen die Prüfung des Absendens und Empfangens von Kurznachrichten, E-Mails, Multimedianachrichten, die Prüfung der richtigen Eingabe von Buchstaben und Zahlen, die Überprüfung der korrekten Speicherung von Namen und Rufnummern oder die Browserfunktionen des Endgeräts.

Das Endgerät 106 ist zur sicheren und fehlerfreien Testdurchführung in einer Haltevorrichtung 109 eingespannt. Die Haltevorrichtung 109 kann beispielsweise als metallischer oder als ein aus einem anderen Werkstoff hergestellten Rahmen ausgestaltet sein. Die Haltevorrichtung 109 umfasst an dem Rahmen angeordnete mechanische Elemente, die zur vorübergehenden Aufnahme von beliebigen, gewichts-, größen- und form-verschiedenen Endgeräten 106 ausgelegt sind. Dabei kann es sich beispielsweise um eine Einspannvorrichtung handeln, die das Endgerät 106 über einen beweglichen Federmechanismus aufnimmt oder eine andere Vorrichtung, bei der das Endgerät 106 in Halterungen mittels Schrauben fixiert wird. Ferner verfügt die Haltevorrichtung 109 über einen Stromversorgungsanschluss, um das Endgerät 106 während eines Tests mit Energie zu versorgen, eine Datenübertragungsschnittstelle, die dazu dient, statische und dynamische Daten als Information während des Tests vom Endgerät 106 über die Datenübertragungsschnittstelle an das Auswerte- und Protokolliermodul 103 zu übertragen.

Der Roboter-Tastfinger 108 ist derart im Bereich der Haltvorrichtung 109, insbesondere darüber angeordnet, dass er Tastaturen von Endgeräten 106 bedienen kann, die in die Haltevorrichtung 109 eingesetzt sind. Positionen in einer Ebene, an der auch die Tastaturebene des zu testenden Endgeräts ausgerichtet wird, können in einem zweidimensionalen Koordinatensystem 113 mit einer x-Achse und einer rechtwinklig dazu angeordneten y-Achse beschrieben werden. Zur Betätigung einer Taste wird der Roboter-Tastfinger 108 an die Position der Taste in der Koordinatenebene gesteuert; dann erfolgt eine Betätigung der Taste durch eine Bewegung des Roboter-Tastfingers 108 in eine Richtung B senkrecht zu der Koordinatenebene.

Ferner verfügt die Testeinrichtung 100 über eine Kameraeinheit 110, die insbesondere zum Erfassen von Abbildern eines Anzeigemoduls 111 dient und entsprechend positioniert werden kann. Die Kameraeinheit 110 ist mit dem Auswerte- und Protokolliermodul 103 elektronisch verbunden. Im Auswerte- und Protokolliermodul 103 können die übertragenen Abbilder des Anzeigemoduls 111 ausgewertet und/oder protokolliert werden. Im Rahmen einer Auswertung können in einem solchen Abbild Zahlen und/oder Buchstaben oder grafische Darstellungen oder Farbinformationen während eines Testlaufs erfasst bzw. erkannt werden. Anhand der Abbilder kann eine Bewertung der Ausgaben erfolgen, wobei insbesondere geprüft werden kann, ob eine erfasste Ausgabe mit einer erwarten Ausgabe übereinstimmt oder nicht. Das Modul 103 kann das Bewertungsergebnis protokollieren und in der im Auswerte- und Protokolliermodul 103 befindlichen Speichereinheit abspeichern.

Weiterhin werden Abbilder der Tastatur bzw. des Tastenfelds des Endgeräts 106 erfasst. Hierzu kann ebenfalls die Kameraeinheit 110 oder eine weitere, in der Figur 1 nicht gezeigte Kameraeinheit verwendet werden. Die Bilder der Tastatur können gleichfalls an die Auswerte- und Protokolliereinheit 103 übermittelt werden, in der die Abbilder insbesondere einer Text- und/oder Objekterkennung unterzogen werden können. Vorzugsweise können die Abbilder der Tastatur zudem auf der Anzeigeeinheit der Benutzerschnittstelle 105 dargestellt werden. Aufgrund der bekannten Eigenschaften der Optik der Kameraeinheit 110 und der Anordnung relativ zu der Tastatur bzw. der Haltvorrichtung können den Punkten des Abbildes Positionen, insbesondere Koordinaten des Koordinatensystems 113 zugeordnet werden.

Die Benutzerschnittstelle 105 der Testeinrichtung 100 ist mit einer oder mehreren Eingabeeinrichtungen ausgestattet, die beispielsweise als eine Tastatur oder einem Mikrofon ausgestaltet sein können. Die Schnittstelle 105 ermöglicht es einem Benutzer insbesondere, Parameter der Tastatur eines zu testenden Endgeräts 106 über die Eingabeeinrichtung oder über Sprachbefehle zu erfassen bzw. einzugeben.

Um mittels der Testeinrichtung 100 ein Endgerät 106 zu testen, ist es neben anderen Testvorbereitungen erforderlich, die Testeinrichtung auf den Typ des Endgeräts 106 voreinzustellen, um später die Testschritte während eines Testlaufs korrekt und ohne Fehler durchführen zu können. Hierzu gehört die Einstellung der Positionen der Tasten der Tastatur des Endgeräts. Es existieren viele verschiedene Endgerätetypen, deren Tastaturen unterschiedlich ausgestaltet sind. Insbesondere unterscheiden sich dabei die Anordnung und Positionen von Tasten auf der Tastatur bzw. einem Tastenfeld.

Bei den vorkommenden Tastenfeldern sind die Tasten in der Regel in Reihen und Spalten angeordnet. Verschiedene Tastaturtypen unterscheiden sich dabei in der Anzahl der Tasten und dementsprechend in der Anzahl der Reihen und Spalten. Es kann vorkommen, dass je Tastenreihe Tasten aus Designvorgaben in gleichmäßig oder verschieden stark gebogene Tastenreihen angeordnet werden. Genauso können die äußeren Formen der Endgeräte bedingen, dass Tastenreihen beispielsweise in Kreisen oder anderen Kurven angeordnet werden. Bei verschiedenen Tastaturen stimmen die Belegungen der vorhandenen Tasten und die Reihenfolge in der die Tasten auf der Tastatur angeordnet sind in der Regel im Wesentlichen überein. Dies bedeutet, dass eine Taste mit einer bestimmten Belegung bei den Tastaturen eines Typs in der Regel benachbart zu Tasten mit weiterer vorgegebener Belegung angeordnet ist. Die Positionen der einzelnen Tasten sind jedoch bei verschiedenen Tastaturen desselben Typs regelmäßig unterschiedlich.

Um diese Varianten von Tastenanordnungen berücksichtigen zu können, werden unterschiedliche Modelle entwickelt, die es ermöglichen, Positionen von Tasten auf einem beliebig ausgestalteten Tastenfeld zu ermitteln. Die Modelle sehen vor, dass die Tasten in Reihen und/oder in Spalten angeordnet sind. Die Reihen umfassen jeweils Tasten, die nacheinander entlang einer Linie angeordnet sind. Verschiedene Reihen werden durch Tasten entlang von nebeneinander verlaufen Linien gebildet. Eine Spalte wird aus den Tasten mehrerer Reihen gebildet, die ihrerseits entlang einer Linie verlaufen und enthält jeweils eine Taste der verschiedenen Reihen. Die vorgegebenen Modelle umfassen insbesondere jeweils eine bestimmte Anzahl von Reihen und Spalten, sowie eine bestimmte Belegung der vorgesehenen Tasten.

Des Weiteren umfassen die vorgegebenen Modelle jeweils einen bestimmten Verlauf der Reihen und Spalten. Dabei können die Modelle insbesondere einen geradlinigen Verlauf der Reihen und Spalten vorsehen, bei dem die Spalten rechtwinklig zu den Reihen verlaufen. Insbesondere können die Reihen in einer Ausrichtung der Tastatur durch horizontale Geraden und die Spalten durch vertikale Gerade gebildet werden. Verschiedene Modelle mit einer derartigen Anordnung der Reihen und Spalten unterscheiden sich in der Anzahl der Reihen und Spalten. Durch derartige Modelle lässt sich eine Vielzahl von Tastaturen nachbilden.

Darüber hinaus existieren jedoch auch Tastaturen, bei denen die Reihen und/oder Spalten keinen geradlinigen Verlauf haben, sondern gekrümmt sind. Insbesondere können die Tastenreihen bogenförmig ausgebildet sein. Weiterhin sind auch andere gekrümmte Anordnungen, wie beispielsweise kreisförmige Anordnungen der Reihen denkbar. Um derartige Tastaturen nachzubilden sind Modelle vorgesehen, die den Verlauf der Reihen und Spalten in geeigneter Weise approximieren.

In einer Ausgestaltung derartiger Modelle, wird der Verlauf der Reihen und/oder Spalten abschnittsweise durch Gerade approximiert. In verschiedenen Abschnitten können die Geraden unterschiedliche Richtungen haben, die jeweils durch einen Parameter beschrieben werden, der hierein als Steigungsparameter bezeichnet wird. Gleichfalls kann eine Approximation anhand von gekrümmten Kurven erfolgen. Die Kurven können abschnittsweise oder als geschlossene Beschreibung des Verlaufs vorgegeben sein und werden gleichfalls durch Steigungsparameter charakterisiert, die ihre Orientierung und/oder Krümmung beschreiben.

Die eingesetzten Modelle sehen vor, dass zwischen den Tasten in einer gleichen Reihe gleiche Abstände zwischen benachbarten Tasten existieren. Vorzugsweise wird zudem davon ausgegangen, dass in allen Reihen derselbe Abstand zwischen benachbarten Tasten vorliegt. Analog sehen die Modelle vor, dass auch zwischen den Tasten einer gleichen Spalte gleiche Abstände bestehen. Dabei wird vorzugsweise ebenfalls davon ausgegangen, dass in verschiedenen Spalten einer Tastatur und gleiche Abstände zwischen benachbarten Tasten bestehen. Im Folgenden wird der Abstand zwischen zwei benachbarten Tasten einer Reihe als $\Delta x$ und der Abstand zwischen zwei benachbarten Tasten einer Spalte als $\Delta y$ bezeichnet.

Zur Ermittlung der Positionen der Tasten einer Tastatur auf der Grundlage eines der im Berechnungsmodul 101 hinterlegten Modelle wird zunächst der Tastaturtyp bestimmt und ein auf den Tastaturtyp abgestimmtes Modell ausgewählt. Wie zuvor erwähnt, wird dabei das Modell ausgewählt, das eine Anzahl von Reihen und Spalten vorsieht, die der Anzahl von Reihen und Spalten der vorliegenden Tastatur entspricht. Weiterhin kann das Modell entsprechend dem vorliegenden Verlauf der Reihen und/oder Spalten ausgewählt werden.

Der jeweilige Typ der Tastatur eines zu testenden Endgeräts 106 wird in einer Ausführungsform von einem Bediener der Testeinrichtung ermittelt und über die Benutzerschnittstelle 105 erfasst bzw. eingegeben. Bei der Eingabe kann der Bediener den Tastaturtyp beispielsweise aus einer Liste auswählen, in der die Tastaturtypen angegeben sind, für die jeweils ein Modell in dem Berechnungsmodul 101 verfügbar ist. Der Tastaturtyp kann jedoch auch mittels einer automatischen Objekterkennung anhand eines Bildes der Tastatur bestimmt werden. Aufgrund der Eingabe bzw. Auswahl nimmt das Berechnungsmodul die nachfolgende Berechnung der Tastenpositionen unter Verwendung des zu dem Tastaturtyp gehörenden Modells vor.

Ferner werden zur Berechnung der Tastenpositionen Parameter der Tastatur des zu testenden Endgeräts 106 erfasst. Die Parameter umfassen eine Position einer ersten vorgegebenen Taste der Tastatur, d.h. einer ersten Taste mit einer vorgegebenen Belegung.

Daneben wird für die Berechnung der Tastenpositionen der Abstand $\Delta x$ zwischen benachbarten Tasten einer Reihe der Tastatur des zu testenden Endgeräts 106 herangezogen. Dieser Abstand kann direkt an der Tastatur gemessen werden. Alternativ werden die Positionen von zwei vorgegebenen Tasten einer Reihen erfasst, und aus diesen Positionen der Abstand berechnet. Dabei kann es sich um zwei benachbarte Tasten handeln oder um vorgegebene Tasten, zwischen denen eine Anzahl von Tasten liegt. Der Abstand $\Delta x$ ergibt sich aus dem erfassten Abstand der vorgegebenen Tasten geteilt durch die Anzahl der dazwischen liegenden Tasten verringert um Eins. Vorzugsweise handelt es sich bei einer der Tasten um die zuvor beschriebene erste Taste und bei der anderen Taste um eine weitere Taste, deren Position zusätzlich zu der Position der ersten Taste erfasst wird.

Weiterhin wird von dem Berechnungsmodul 101 der Abstand $\Delta y$ zwischen zwei benachbarten Tasten einer Spalte für die modellbasierte Berechnung der Tastenpositionen verwendet. Dieser Abstand kann ebenfalls direkt gemessen werden oder aus den Positionen von zwei vorgegebenen Tasten in einer Spalte ermittelt werden. Hierbei muss es sich nicht um benachbarte Tasten handeln, sondern es können auch weitere Tasten zwischen den Tasten liegen, deren Position erfasst wird. Wie auch bei den Positionen der Tasten einer Reihen ist es vorzugsweise vorgesehen, dass eine der beiden Tasten, deren Positionen für die Ermittlung des Abstands Δy herangezogen werden, die zuvor genannte erste Taste ist, und die Position der zweiten Tasten zusätzlich ermittelt wird.

Sofern es sich um ein Modell mit gekrümmten Reihen und/oder Spalten handelt, werden ein oder mehrere Steigungsparameter ermittelt. Diese dienen dazu, die Approximation des Verlaufs der gekrümmten Reihen bzw. Spalten zu bestimmen und können gleichfalls aus den Positionen mehrerer vorgegebener Tasten der gekrümmten Reihen und/oder der gekrümmten Spalten ermittelt werden. Bei der zuvor beschriebenen Approximierung durch Gerade entsprechen die Steigungsparameter den Steigungen der Geraden bzw. ihrem Winkel zu einer Achse des Koordinatensystems 113. Diese Parameter können in an sich bekannter und weiter unten noch erläuterter Weise aus den Positionen von zwei Tasten ermittelt werden, die sich in dem durch die entsprechende Gerade approximierten Abschnitt einer Reihe bzw. einer Spalte befinden.

Wenn die verschiedenen Reihen einer Tastatur bzw. die verschiedenen Spalten der Tastatur des zu testenden Endgeräts zumindest näherungsweise parallel verlaufen, wird vorzugsweise auch ein Modell mit parallel verlaufenden Reihen bzw. Spalten gewählt. Für die Berechnung der Tastenpositionen mittels eines solchen Modells brauchen die Steigungsparameter lediglich für eine Reihe bzw. Spalte ermittelt zu werden. Zudem kann beispielsweise bei bogenförmiger Anordnung einer Reihe oder Spalte die Spiegelsymmetrie der Anordnung ausgenutzt werden. Wie weiter unten erläutert wird, kann eine erste Gerade zur Approximation eines ersten Abschnitts einer Reihe oder Spalte hier insbesondere spiegelsymmetrisch zu einer zweiten Gerade zur Approximation eines zweiten Abschnitts der Reihe sein. In diesem Fall ist der Steigungsparameter nur für die erste Gerade zu ermitteln. Er legt den Verlauf der zweiten Gerade ebenfalls fest.

Die verwendeten Positionen der Tasten beziehen sich auf das Koordinatensystem 113, in dem auch die Steuerung des Roboter-Tastfingers 108 erfolgt. Sie können auf verschiedene Weise ermittelt werden. In einer Ausführungsform wird zur Ermittlung der Positionen ein Abbild der Tastatur herangezogen. In diesem Abbild markiert der Bediener der Testeinrichtung mithilfe der Benutzerschnittstelle 105 die Taste(n), deren Position ermittelt werden soll (vorzugsweise wird die Markierung jeweils im Zentrum der Taste angebracht). Dann werden in dem Auswertemodul 103 oder in dem Berechnungsmodul 101 die Koordinaten bestimmt, die den Markierungen entsprechen. Alternativ zu der manuellen Markierung kann auch eine automatische Erkennung und Markierung der vorgegebenen Tasten unter Verwendung einer automatischen Objekt- bzw. Texterkennung vorgesehen sein.

Das zu testende Endgerät 106 wird vorzugsweise derart in der Haltevorrichtung 109 angeordnet, dass sich (nicht gekrümmte) Tastaturreihen entlang der x-Achse des Koordinatensystems 113 und/oder (nicht gekrümmte) Tastaturspalten entlang der y-Achse des Koordinatensystems 113 erstrecken.

Unter Verwendung der zuvor beschriebenen Parameter können die Positionen aller Tasten der Tastatur des zu testenden Endgeräts von dem Berechnungsmodul bestimmt werden. Dies geschieht beispielsweise ausgehend von der zuvor genannten ersten Taste. Dabei kann etwa die Position einer Taste, die sich in derselben Reihe befindet, wie die erste Taste oder eine weiteren Taste, deren Position bereits ermittelt worden ist, bestimmt werden, indem dem der Verlauf der Reihe über eine Entfernung gefolgt wird. Der Verlauf der Reihe ergibt sich gegebenenfalls insbesondere aus dem Steigungsparameter oder den Steigungsparametern. Die Entfernung beträgt (i+1)Δx, wobei i die Anzahl der Tasten ist, die zwischen der betreffenden Taste und der Taste liegt, deren Position bekannt ist. Entsprechend kann die Position einer Taste, die sich in derselben Spalte befindet, wie eine Taste, deren Position bereits bekannt ist, dadurch bestimmt werden, dass dem Verlauf der entsprechenden Spalte über eine Entfernung gefolgt wird. Die Entfernung beträgt hier (i+1)Δy, wobei i wiederum die Anzahl der Tasten bezeichnet, die zwischen der betreffenden Taste und der Taste mit bekannter Position liegt.

Im Folgenden werden beispielhaft einige Tastaturtypen sowie die zugehörigen Modelle dargestellt, und es wird erläutert, wie die Tastenpositionen für diese Tastaturtypen ermittelt werden:

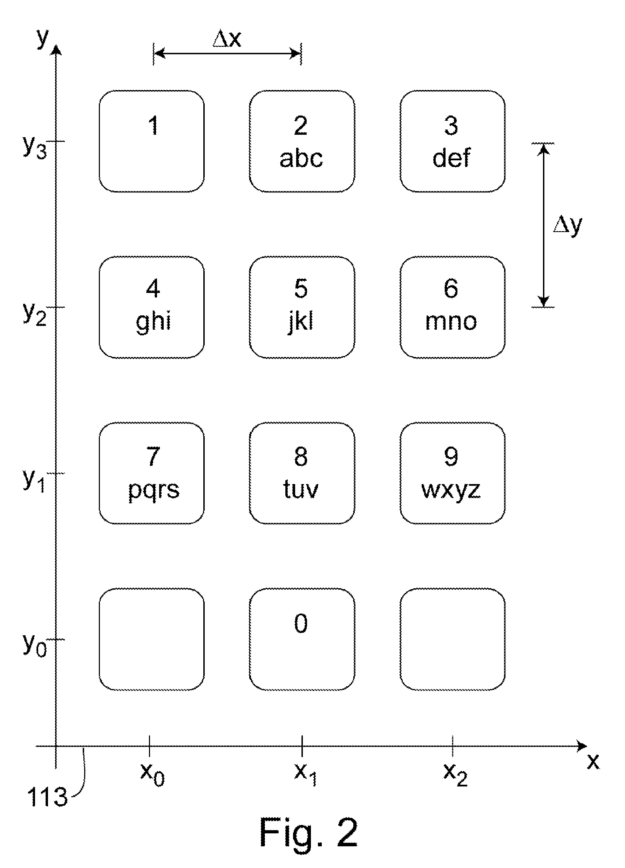

Bei einem ersten Tastaturtyp handelt es sich um ein reduziertes Tastenfeld, mit dem das Mobiltelefon hinsichtlich seiner Optik klein in seinen Abmessungen gehalten werden kann. Bei dem reduzierten Tastenfeld sind zumindest einige Tasten mehrfach, insbesondere mit mehreren Buchstaben belegt. Ein solch reduziertes Tastenfeld wird modellhaft als Feld aus einer Anzahl von Reihen und einer Anzahl von Spalten angenommen. Die Figur 2 zeigt die funktionale Belegung der Tasten einer Tastatur eines Endgeräts 106 und dass das Tastenfeld aus vier Reihen und drei Spalten besteht. Gemäß Fig. 2 ist die Taste in der ersten Reihe und ersten Spalte mit der Zahl "1" belegt. Die Eingabe und Anzeige dieser Zahl wird durch einmaliges Betätigen der Taste erreicht. Die nächste Taste in der ersten Reihe und zweiten Spalte ist mit der Zahl "2" als eine Funktion belegt. Weiterhin sind dieser Taste wie aus der Fig. 2 ersichtlich die Buchstaben A, B und C als weitere Funktionen zugeordnet. Die Eingabe des Buchstaben "B" kann durch zweimaliges Betätigen dieser Taste erfolgen. Die Bedienung der Tastatur eines Endgeräts 106 ist dem Fachmann bekannt, so dass an dieser Stelle nicht weiter auf einzelne oder weitere Funktionen und der Bedienung von Tastaturen eingegangen wird.

Für Endgeräte 106 mit reduziertem Tastenfeld wird durch den Tester oder automatisch zunächst der Tastaturtyp bestimmt, der durch das Erfassen der Anordnung von Reihen und Spalten zueinander auf dem Tastenfeld ermittelt werden kann. Dabei können für reduzierte Tastenfelder mehrere Modell vorgesehen sein, die sich in der Anzahl der Reihen und Spalten unterscheiden. Ferner können Modelle für geradlinige und gekrümmte Reihen und/oder Spalten vorgesehen sein. In dem in der Figur 2 dargestellten Fall umfasst das Tastenfeld drei Spalten und vier Reihen, die geradlinig und rechtwinklig zueinander angeordnet sind.

Nach Auswahl des entsprechenden Modells, können die Position von drei vorgegebenen Tastenpositionen, beispielsweise der Taste "1", der Taste "2" und der Taste "4" mit ihren Koordinaten, wie in Figur 2 dargestellt, erfasst werden. Damit kann anhand des ausgewählten Modells der Abstand zwischen zwei benachbarten Tasten der gleichen Reihe aus Δx= x1 - x0 bestimmt werden. Nach Δy= y2-y1 wird ein Abstand zwischen zwei benachbarten Tasten der gleichen Spalte ermittelt. Es können auch drei andere Tasten aus dem Tastenfeld erfasst werden, unter der Voraussetzung, dass immer zwei Tasten aus der gleichen Reihe und zwei Tasten aus der gleichen Spalte gewählt werden. Steigungsparameter brauchen aufgrund des geradlinigen Verlaufs der Reihen und Spalten parallel zu den Achsen des Koordinatensystems 113 nicht erfasst zu werden.

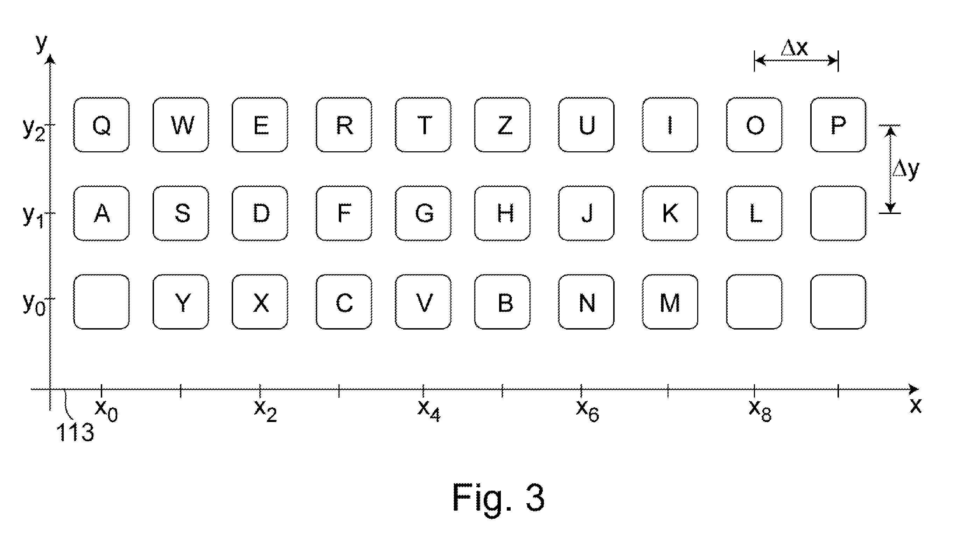

Bei einem zweiten Tastaturtyp handelt es sich um ein vollständiges Tastenfeld wie in Figur 3 dargestellt. Dieser Typ unterscheidet sich vom vorangegangenen dadurch, dass den Buchstaben jeweils genau eine Taste zugeordnet ist. Entsprechend der in der Figur 3 dargestellten Anordnung der Tasten des vollständigen Tastenfeldes wird ein Modell ausgewählt, dass drei Tastenreihen und zehn Tastenspalten umfasst und eine geradlinige, rechtwinklige Anordnung der Reihen und Spalten vorsieht. Wie in Fig. 3 dargestellt, wird anhand der oben allgemein beschriebenen Annahmen für dieses Modell der Abstand Δx aus dem Abstand zwischen den Tasten "Q" und "T", der Abstand Δy aus dem Abstand zwischen den Tasten "Q" und "A" ermittelt. Wie schon oben für die Modelle beschrieben, können auch drei andere Tasten gemäß den beschriebenen Regeln ausgewählt werden, deren Positionen als Modellparameter bzw. zur Bestimmung der Modellparameter ermittelt werden.

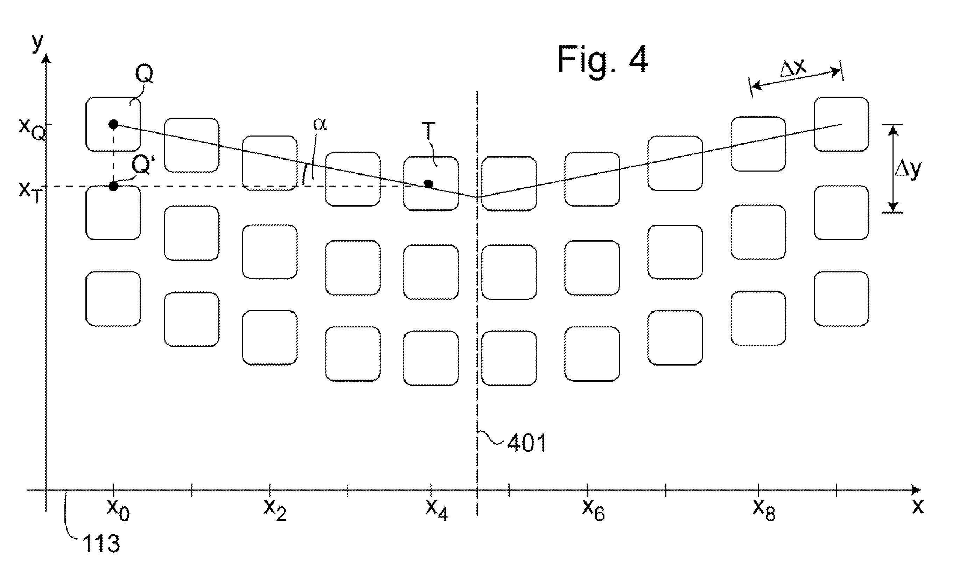

In einem weiteren Beispiel, das in der Figur 4 dargestellt ist, kann das Endgerät 106 eine Tastatur aufweisen, bei der die Tasten bogen- bzw. kurvenförmig angeordnet sind. Bei der gezeigten Ausgestaltung handelt es sich um eine vollständige Tastatur mit bogenförmigen Reihen. Eine ähnliche bogenförmige Anordnung kann jedoch auch bei Endgeräten mit einer reduzierten Tastatur auftreten.

Bei der dargestellten Tastatur verlaufen die bogenförmigen Reihen parallel zueinander. Der Bogen wird durch zwei Geraden approximiert, die, wie auch der Bogen, spiegelsymmetrisch bezüglich einer Symmetrieachse 401 angeordnet sind. Zur Berechnung der Tastenpositionen in dem Modell ist es erforderlich, neben den Abständen der benachbarten Tasten der Reihen und der Spalten zusätzlich einen Steigungsparameter zu ermitteln. Dieser entspricht beispielsweise dem Winkel α zwischen einer Geraden und der x-Achse des Koordinatensystems (dessen y-Achse parallel zu den Spalten der Tastatur angeordnet ist).

Wie in Figur 4 schematisch veranschaulicht, kann der Steigungsparameter α aus dem Winkel zwischen der Verbindungslinie der Tasten "T" und "Q" mit ihrer Länge X und der rechtwinklig zur Symmetrieachse des Tastenfelds liegenden Verbindungslinie Z bestimmt werden, wobei Z die Taste "T" mit dem Punkt "Q'" verbindet. Wenn die Position der Taste "Q" mit (x0, yQ) und die Position der Taste "T" mit (x4, yT) bezeichnet wird, kann der Winkel α näherungsweise berechnet werden aus:

$$\tan \alpha = (yT-yQ)/(x4-x0)$$

Der Abstand Δx zwischen benachbarten Tasten einer Reihe ergibt sich ebenfalls aus den erfassten Positionen der Tasten "Q" und "T", insbesondere aus:

$$X\!/\!4 = \frac{1}{4}\sqrt{(x4-x0)^2 + (yQ-yT)^2}$$

Der Abstand Δx kann beispielsweise aus den erfassten Positionen der Taste "Q" und einer weitere Taste in der ersten (linken) Spalte der Tastatur ermittelt werden.

Die Positionen der Tasten der Tastatur des zu testenden Endgeräts werden, wie zuvor erläutert, in dem Berechnungsmoduls 101 ermittelt. In einer Ausgestaltung wird die Berechnung für alle Tasten vor dem Start des eigentlichen Gerätetests vorgenommen. Am Ende der Berechnungen können die ermittelten Positionen in dem Auswerte- und Protokolliermodul 103 gespeichert und an das Steuermodul 102 übermittelt werden. Während des Testdurchlaufs verwendet das Steuermodul 102 dann diese ermittelten Positionen, um die Betätiger-Einheit 107 mit dem Tastfinger 108 an die Position einer gewünschten Taste zu steuern und damit dann der Tastfinger 108 die Taste fehlerfrei betätigen kann.

Die Speicherung der Tastenpositionen im Speichermodul 104 ermöglicht es dem lokalen Taster, später im Falle eines identischen zu testenden Endgeräts 106 auch die erforderlichen Tests schneller durchführen zu können.

Insbesondere können die Tastenpositionen in einem solchen Fall wieder aufgerufen werden, ohne nochmals eine Berechnung durchführen zu müssen.

In der zuvor dargestellten Weise lassen sich Endgeräte 106 insbesondere beim Auftreten eines Fehlers in einer wie oben beschriebenen Testroutine überprüfen, um die Fehlerursache zu ermitteln. Ferner können solche Endgeräte 106 vor ihrem Vertrieb bzw. ihrer Markteinführung auf ihre einwandfreie Funktionsweise hin überprüft werden. Sofern diese Geräte 106 in großen Stückzahlen verkauft werden, wie es beispielsweise bei Kommunikationsendgeräten in der Regel der Fall ist, kann sich der Test auch auf eines oder mehrere ausgewählte Geräte beschränken, da ein Test aller hergestellten Geräte zu aufwendig wäre. In diesem Fall kann jedoch auch mit hoher Zuverlässigkeit die Funktionsweise baugleicher Geräte ermittelt werden.

Obwohl die Erfindung in den Zeichnungen und der vorausgegangenen Darstellung im Detail beschrieben wurde, sind die Darstellungen illustrativ bzw. beispielhaft und nicht einschränkend zu verstehen; insbesondere ist die Erfindung nicht auf die erläuterten Ausführungsbeispiele beschränkt. Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten beziehungsweise Einrichtungen ausführen.

In den Patentansprüchen angegebene Bezugszeichen sind nicht als Beschränkungen der eingesetzten Mittel und Schritte anzusehen.

**Bezugszeichenliste**

| | |
|---|---|
| Testeinrichtung | 100 |
| Berechnungsmodul | 101 |
| Steuermodul | 102 |
| Auswerte- und Protokolliermodul | 103 |
| Benutzerschnittstelle | 105 |
| Endgerät | 106 |
| Betätiger-Einheit | 107 |
| Roboter-Tastfinger | 108 |
| Haltevorrichtung | 109 |
| Kameraeinheit | 110 |
| Anzeigemodul | 111 |
| Testprogramm-Modul | 112 |
| Koordinatensystem | 113 |
| Symmetrieachse | 401 |

**Patentansprüche**

1. Verfahren zum Betätigen einer ersten Taste einer Tastatur mittels eines Roboter-Tastfingers, wobei das Verfahren folgende Schritte umfasst:

- Erfassen von Parametern der Tastatur,
- Ermitteln einer Position der ersten Taste in Abhängigkeit von den erfassten Parametern unter Verwendung eines Modells der Tastatur,
- Steuern des Roboter-Tastfingers an die ermittelte Position der ersten Taste und
- Betätigen der ersten Taste mit dem Roboter-Tastfinger.

2. Verfahren nach Anspruch 1, wobei das Modell in Abhängigkeit von einem erfassten Typ der Tastatur aus einer Mehrzahl von Modellen ausgewählt wird.

3. Verfahren nach Anspruch 1 oder 2, wobei den Modellen jeweils eine Anordnung der Tasten in Reihen und Spalten mit gleichen Abständen zwischen den Tasten einer Reihe und den Tasten einer Spalte zugrunde liegt.

4. Verfahren nach einem der vorherigen Ansprüche, wobei es sich bei einem ersten erfassten Parameter um einen Abstand zwischen zwei vorgegebenen Tasten einer Reihe handelt oder um Positionen von vorgegebenen weiteren Tasten einer Reihe.

5. Verfahren nach einem der vorherigen Ansprüche, wobei es sich bei einem zweiten erfassten Parameter um einen Abstand zwischen zwei vorgegebenen Tasten einer Spalte handelt oder um Positionen von vorgegebenen weiteren Tasten einer Spalte.

6. Verfahren nach einem der vorherigen Ansprüche, wobei wenigstens ein Modell eine Anordnung der Tasten einer Reihe und/oder einer Spalte entlang mehrerer Geraden vorsieht.

7. Verfahren nach Anspruch 6, wobei die Geraden spiegelsymmetrisch bezüglich einer Mittelachse in einer Tastaturebene sind.

8. Verfahren nach Anspruch 6 oder 7, dass es sich bei einem weiteren Parameter um wenigstens einen Steigungsparameter handelt, der eine Ausrichtung wenigstens einer Geraden beschreibt.

9. Verfahren nach einem der vorherigen Ansprüche, wobei sich die Modelle in der Anzahl der Reihen von Tasten und/ oder Spalten von Tasten unterscheiden.

10. Verfahren nach einem der vorherigen Ansprüche, wobei ein erstes Modell eine Anordnung der Tasten in drei Spalten und vier Reihen vorsieht.

11. Verfahren nach Anspruch 10, wobei das erste Modell zur Ermittlung der Position einer Taste eines reduzierten Tastenfeldes herangezogen wird.

12. Verfahren nach einem der Ansprüche 1-10, wobei ein zweites Modell eine Anordnung der Tasten in zehn Spalten und drei Reihen vorsieht.

13. Verfahren nach einem der vorherigen Ansprüche, wobei das zweite Modell zur Ermittlung der Position einer Taste eines vollständigen Tastaturfeld herangezogen wird.

14. Computerprogramm mit einem Softwarecode zur Durchführung eines Verfahrens nach einem der vorherigen Ansprüche, wenn es auf einem Prozessor ausgeführt wird.

15. Vorrichtung zum Betätigen einer Taste einer Tastatur umfassend ein Steuermodul und ein Berechnungsmodul, wobei das Berechnungsmodul dazu ausgestaltet ist, eine Position der Taste in Abhängigkeit von den erfassten Parametern der Tastatur unter Verwendung eines Modells der Tastatur zu ermitteln und wobei das Steuermodul dazu ausgestaltet ist, den Roboter-Tastfinger an die in dem Berechnungsmodul ermittelte Position der ersten Taste zu steuern.

Fig. 1

Fig. 2

Fig. 3

EP 2 405 356 A2

Fig. 4

EP 2 405 356 A2

**EP 2 405 356 A2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006004284 A1